# EUROPÄISCHE PATENTSCHRIFT

(11) **EP 2 027 170 B1**
(45) Veröffentlichungstag und Bekanntmachung des Hinweises auf die Patenterteilung: **24.07.2013**
(21) Anmeldenummer: 07729962.6
(22) Anmeldetag: 06.06.2007
(51) Int. Cl.: C08F 299/04, F01L 1/047

(54) **WELLE MIT FIXIERTEM BAUTEIL**
SHAFT WITH FIXED COMPONENT
ARBRE AVEC UN COMPOSANT FIXE

(30) Priorität: 14.06.2006 DE 102006027494
(43) Veröffentlichungstag der Anmeldung: 25.02.2009
(73) Patentinhaber: Henkel AG & Co. KGaA, 40589 Düsseldorf (DE)
(72) Erfinder: MAYER, Wolfgang, 85540 Gronsdorf (DE)
(86) Internationale Anmeldenummer: PCT/EP2007/055588
(87) Internationale Veröffentlichungsnummer: WO 2007/144301

(56) Entgegenhaltungen:
- EP-A1- 0 340 128
- WO-A-2004/079163
- DE-A1- 2 336 241
- DE-A1- 19 502 381
- GB-A- 2 277 361
- GB-A- 2 290 599
- US-A- 4 524 176

## Beschreibung

Die Erfindung bezieht sich auf eine Welle mit einem fixierten Bauteil. Derartige Wellen werden insbesondere als Nockenwellen für beispielsweise Brennkraftmaschinen zur Steuerung von Ventilen eingesetzt. Die Erfindung bezieht sich jedoch nicht nur auf Nockenwellen, sondern kann überall dort Verwendung finden, wo sich durch deren Einsatz fertigungstechnisch Kosten- und Qualitätsvorteile ergeben.

Im Stand der Technik sind Nockenwellen bekannt, die aus Gusseisen oder Hartschalenguss einstückig hergestellt werden. Diese Bauteile haben jedoch den Nachteil, dass von der Herstellung des Rohkörpers bis zur einbaufertigen Nockenwelle kosten- und zeitaufwändigige Bearbeitungsschritte, wie Nockenschleifen, thermische Behandlung und Richten durchgeführt werden müssen. Ein weiteres Herstellungsverfahren ist die Fertigung einer mehrstückigen Nockenwelle. Derartige Nockenwellen werden als gebaute Nockenwellen bezeichnet. Der Wellenkörper und die Nocken werden auf getrennte Art und Weise hergestellt. Die im Wesentlichen fertig hergestellten Nocken können anschließend auf dem Wellenkörper fixiert werden. Die DE4121951C1 beschreibt solch eine gebaute Nockenwelle. Hier werden der Wellenkörper und die Nocken getrennt gefertigt. Der Wellenkörper besitzt abschnittsweise gegenüber den anderen Bereichen des Wellenkörpers einen vergrößerten Durchmesser, auf den die Nocken aufgeschoben werden. Die Fixierung der Nocken auf dem Wellenkörper wird durch einen Kraft- oder Reibschluß zwischen den Abschnitten vergrößerten Durchmessers des Wellenkörpers und der Nocken erreicht. Der Nachteil dieses Herstellungsverfahren ist jedoch die lagerichtige Positionierung des Nockens in radialer Richtung hinsichtlich des Nockenwellenkörpers. Eine falsche Positionierung der Nocken zueinander kann insbesondere bei Brennkraftmaschinen weit reichende Auswirkungen haben, da selbst bei einer sehr geringen Abweichung der Position der Nocken insbesondere die Steuerung der Ventile der Brennkraftmaschine nicht mehr gewährleistet werden kann. Im Stand der Technik sind auch andere kraft- oder reibschlüssige Verbindungen bekannt. Ein bekanntes Verfahren ist die Herstellung der Verbindung zwischen Bauteil und Welle durch einen zylindrischen Pressverband. Dies ist jedoch ein aufwändiges und kostenintensives Verfahren. Zudem muss ein Wellenhohlkörper eingesetzt werden, der eine entsprechende Wandstärke aufweist. Bei zu dünnwandigen Wellenhohlkörpern kann sich eine plastische Verformung einstellen.

Bekannt sind auch stoffschlüssige Verbindungen bei Wellen mit Bauteilen, beispielsweise durch den Einsatz von Klebstoff. Diese Verbindungen konnten sich jedoch, insbesondere für Nockenwellen, wegen der geringen Langzeitbeständigkeit der Verbindung unter dem Einfluss von Wärme und Öl nicht durchsetzen. Kommt eine Brennkraftmaschine beispielsweise in einem Zustand zum Stillstand, an dem eine Nocke der Nockenwelle unter Belastung steht, neigt der Klebstoff zum kriechen, was zu einer radialen Verdrehung der Nocke relativ zum Wellenkörper führen kann. Dieser Umstand wird durch die in Verbrennungsmaschinen üblichen hohen Temperaturen und das vorhandene Öl noch verstärkt. Eine fehlerfreie erneute Inbetriebnahme der Brennkraftmaschine wäre in diesem Fall nicht mehr gewährleistet.

Die DE2838995 zeigt eine gebaute Nockenwelle, wobei die Nocken durch eine Profilierung radial fixiert werden. Durch Hartlöten wird die Nocke mit dem Wellenkörper an Ihrer vorgesehen Position fest verbunden. Nachteilig bei dieser Variante ist der Einfluss von Hitze auf das Material durch das Hartlöten. Durch diese Fügetechnik werden hohe Spannungskonzentrationen an den Nahtstellen verursacht, die die Belastungsfähigkeit der gesamten Nockenwelle einschränken. Dieser Nachteil ergibt sich auch bei anderen Verbindungstechniken beider Bauteile, bei denen Wärme abgegeben wird, wie beispielsweise Sintern oder Schweißen. Um die hohen Spannungskonzentrationen auszugleichen sind weitere kostenintensive Bearbeitungschritte der Nockenwelle, wie beispielsweise Anlassen oder Spannurigsarmglühen, notwenig, die die Wirtschaftlichkeit des Verfahrens stark beschränken.

Das Dokument DE2336241 offenbart eine Nockenwelle, bei der die Nocken mittels Kleben befestigt sind. Dokument DE19502381 veröffentlicht eine Klebetechnik für Blechteile.

Aufgabe der Erfindung ist es daher, eine verbesserte und kostengünstigere gattungsgemäße Vorrichtung bereitzustellen, die die oben aufgeführten Nachteile nicht aufweist.

Diese Aufgabe wird durch die Merkmale des Anspruchs 1 gelöst.

Die vorteilhaften Ausgestaltungen der Erfindung sind mit den Unteransprüchen angegeben.

Der Grundgedanke der Erfindung besteht darin, die Verbindung zwischen einem Wellenkörper und einem Bauteil durch einen kombinierten Stoff- und Formschluss herzustellen, wobei der Stoffschluß über ein wärmearmes Fügeverfahren mittels eines hochfesten Strukturklebstoffes bereitgestellt wird. Beispielsweise kann durch den Formschluß eine lagerichtige Positionierung des Bauteils auf dem Wellenkörper in radialer Richtung hinsichtlich des Wellenkörpers ermöglicht werden. Denkbar ist es, den Wellenkörper mit einem bestimmten Profil, wie beispielsweise einem Polygonprofil, oder einer oder mehreren Nuten auszubilden. Dabei weist das zu fixierenden Bauteil ein entsprechendes Profil bzw. ein oder mehrere Vorsprünge auf, die in die entsprechenden Gegenstücke des Wellenkörpers eingreifen. Auf diese Weise kann durch die Gestaltung des Wellenkörpers und des Bauteils vor der Montage durch Zusammenschieben festgelegt werden, wie die Position der beiden Bauteile zueinander ist. Natürlich sind auch andere Arten von formschlüssigen Verbindungen denkbar, wie beispielsweise Passfederverbindungen oder Keilwellenverbindungen. Vorteilhaft ist eine Formschlussverbindung symmetrisch zur Wellenachse, damit die zu übertragenen Kräfte gleichmäßig verteilt werden. Nach einer vorzugsweise lagerichtigen Positionierung durch eine formschlüssige Verbindung des Bauteils erfolgt die feste Verbindung von Wellenkörper und Bauteil durch ein wärmearmes Fügeverfahren mittels Stoffschluß. Zum Einsatz kommen hier hochfeste Strukturklebstoffe. Vorzugsweise fixiert diese stoffschlüssige Verbindung das Bauteil auf dem Wellenkörper in axialer Richtung hinsichtlich des Wellenkörpers und zusätzlich zu dem Formschluß in radialer Richtung. Unter Betriebsbedingungen am Bauteil angreifende Kräfte werden somit sowohl über die stoffschlüssige, als auch über die formschlüssige Verbindung übertragen.

Als Klebstoffe sind die bekannten hochfesten Strukturklebstoffe geeeignet. Diese sind insbesondere ausgewählt aus 1- oder 2- komponentigen Klebstoffen auf Basis von vernetzenden Polyurethanen, Epoxidharzen und/oder anaerob vernetzenden acrylathaltigen Klebstoffen. Es können auch temperaturstabile Polyimidklebstoffe eingesetzt werden. Die Klebstoffe sollen unter den Anwendungsbedingungen temperatur- und lösemittelstabil sein. Unter Epoxidharzklebstoffen sind Klebstoffe auf Basis von Epoxidgruppen-haltigen Oligomeren oder Polymeren zu verstehen, die mit nucleophilen oder elektrophilen Härtern vernetzen können, wie beispielsweise Polyaminen, Polyamiden, Polymercaptanen, Polyolen oder Polyphenolen. Unter anaerob härtenden Klebstoffen sind solche zu verstehen, die Oligomere oder Polymere mit ungesättigten Doppelbindungen enthalten, wie beispielsweise Acrylatgruppen, und wobei die radikalische Vernetzung durch Aktivator/Initiatorsysteme eingeleitet wird, und unter anaeroben Bedingungen ausgelöst wird. Als Aktivatoren sind Redox-Systeme bekannt, insbesondere sind metallhaltige Systeme geeignet. Unter Polyurethanklebstoffen sind reaktive Klebstoffe auf Basis von Isocyanatgruppen-haltigen Polyurethanen zu verstehen, die als 2 -K System oder als 1-K System vorliegen können. Dabei vernetzen 1-K Systeme beispielsweise mit Wasser oder latente Härter werden unter Wärmeeinwirkung aktiviert. Bei 2-K Systemen werden Isocyanat-haltige Prepolymere mit Härtern umgesetzt, die nucleophile, mit Isocyanaten reaktive Gruppen enthalten, wie beispielsweise OH, NH, SH, COOH-Gruppen.

Geeignete Klebstoffsysteme werden beispielsweise in der Encyclopedia of Polymer Science and Technology (Verlag Wiley, 2005 ) im Kapitel "structural adhesives" beschrieben. Solche Klebstoffe können mit bekannten weiteren Hilfs- und Zusatzstoffen gemischt werden, beispielsweise Katalysatoren, Füllstoffe, Reaktivverdünnern, Haftvermittlern, über die gezielt Eigenschaften des Klebstoffs beeinflusste werden können.

Da die Klebstoffschicht während des Betriebs der Welle hauptsächlich auf Scherung belastet wird, ist der Spalt zwischen Bauteil und Wellenkörper, in dem sich die hochfeste Strukturklebstoffschicht befindet, vorzugsweise möglichst gering zu halten. Vorteilhaft hat sich eine Verwendung eines Spaltmaßes zwischen dem Bauteil und dem Wellenkörper unter 500 µm erwiesen. Auf diese Weise wird verhindert, dass der Klebstoff unter den bei Betriebsbedingungen am Bauteil angreifenden Kräften abschert und die stoffschlüssige Verbindung zerstört wird.

Es kommen im Rahmen der Erfindung sowohl massive, als auch hohle Wellenkörper in Frage. In einer vorteilhaften Weiterbildung der Erfindung ist vorgesehen, als Wellenkörper ein Wellenhohlrohr vorzusehen. Auf diese Weise kann beispielsweise Gewicht eingespart werden was insbesondere für den Einsatz in Brennkraftmaschinen von großem Vorteil ist. Hier kann das Wellenhohlrohr auch insbesondere zum Öltransport eingesetzt werden. Dabei können gleichermaßen sehr hohe dynamische Drehmomente wie bei massiven Wellen körpern übertragen werden. Der Wellenkörper kann im Rahmen der vorliegenden Erfindung aus metallischen oder nicht metallischen Werkstoffen, insbesondere aus Eisen-Kohlenstoff-Material, aus legiertem oder unlegiertem Eisen, aus Lamellen- oder Kugelgrafiteisen, Stahlguß oder Spritzguß sowie ein je nach Verwendungszwecks der Welle zweckdienlichen Materialien bestehen.

Ein weiter Vorteil ist der Einsatz eines Wellenkörpers als Wellenhohlrohr mit Mitteln für einen Unwuchtausgleich. Dabei kann der Wellenkörper bereits bei seiner Herstellung in vorgegebener Weise schwingungstechnisch ausgewuchtet geformt werden. Denkbar ist hier beispielsweise ein gegossener Wellenkörper, der in Bereichen eine geringere oder stärkere Wandstärke in Form von Ein- oder Ausbuchtungen aufweist. So kann die Welle schon bei diesem ersten Herstellungsgang des Wellenkörpers den vorbestimmten schwingungstechnischen Merkmalen entsprechend ausgewuchtet hergestellt werden. Alternativ oder zusätzlich ist eine entsprechende Innenprofilierung des als Wellenhohlrohrs ausgestalteten Wellenkörpers gemäß der für die formschlüssige Verbindung mit den Bauteilen notwendigen Außenprofilierung denkbar. Formt man beispielsweise das Außenprofil des Wellenkörpers als Polygonprofil aus, ist es vorteilhaft, das Innenprofil invertiert zum Au ßenprofil des Wellenkörpers zu gestalten.

In Ausgestaltung der Erfindung ist vorgesehen, den Wellenkörper und die Bauteile aus dem gleichen Werkstoff herzustellen. Dies vereinfacht beispielsweise insbesondere bei einfachen, weniger belasteten Wellen-Bauteil-Anordnungen die Herstellung und Bearbeitung, da man nicht die Merkmale und Eigenschaften verschiedener Materialien beachten muss.

Ein weiterer Vorteil ist die Fertigung von Wellenkörper und mindestens eines Bauteils aus verschiedenen Werkstoffen. Beispielsweise können für die mit dem Wellenkörper verbundenen Bauteile hochwertige und/oder funktionsgerechte Werkstoffe eingesetzt werden, die den Belastungsanforderungen besser standhalten. Dabei können beispielsweise der Wellenkörper und/oder geringer belastete Bauteile aus kostengünstigeren und/oder leichter zu bearbeitenden Werkstoffen fabriziert werden, so dass ein zusätzliches Einsparpotential bei gleichzeitiger hoher Belastbarkeit erreicht werden kann. Für die hochbelasteten Bauteile können insbesondere äußerst verschleißfeste Kugellagerstähle, Stahlguss-, Guss-, Keramik- oder Sinterwerkstoffe eingesetzt werden.

Ein weiterer Vorteil ist der Einsatz von Bauteilen aus gesintertem Material. Bei der Verwendung von Sinterbauteilen, kann insbesondere bei entsprechend exakter Herstellung der Bauteile und des Wellenkörpers sowie entsprechend genauer Montage von weiteren Bearbeitungsschritte der Welle wie beispielsweise Schleifprozessen abgesehen werden. Durch Sintertechnologie können Bauteile beliebiger Formen hergestellt werden, die ohne jede mechanische Nachbehandlung einbaufertig sind. Ein Beispiel ist der Einsatz der Bauteile und des Wellenkörpers in einer Nockenwelle mit einem profilierten Wellenkörper, beispielsweise einem Oval, einer Ellipse oder einem Polygon. Durch die Sintertechnologie können die Öffnungen der Bauteile, wie beispielsweise Nocken oder andere Steuerelemente, mit denen diese auf den Wellenkörper aufgeschoben werden, je nach Profil des Wellenkörpers und je nach radialer Lage der Bauteile auf dem Wellenkörper hinsichtlich der Achse des Wellenkörpers, gestaltet werden. Weitere vorteilhafte Herstellungsarten der Bauteile können das Sinterschmieden, Gießen oder Schmieden sein.

In einer vorteilhaften Weiterbildung der Erfindung handelt es sich bei der Welle um eine Nockenwelle, wie sie beispielsweise in Brennkraftmaschinen zum Einsatz kommen kann. Dabei können der Wellenkörper ein Nockenwellenrohr und die Bauteile beispielsweise Nocken, Kettenradaufnahmen, Axiallager, Axiallagerschulter, Signalgeber, Exzenter und/oder Zahnräder sein.

Im Folgenden werden einige mögliche Ausführungsformen der Erfindung anhand von Zeichnungen näher erläutert.
Figur 1 zeigt eine geschnittene Seitenansicht einer erfindungsgemäßen Welle mit Bauteilen.
Figur 2 zeigt eine erfindungsgemäße Welle mit Bauteil im Querschnitt.

### Bezugszeichenliste:

1. Nockenwelle
2. Wellenkörper
3. Nocke
4. Klebeschicht
5. Einbuchtung
6. Ausbuchtung
7. Vorsprung
8. Aussparung

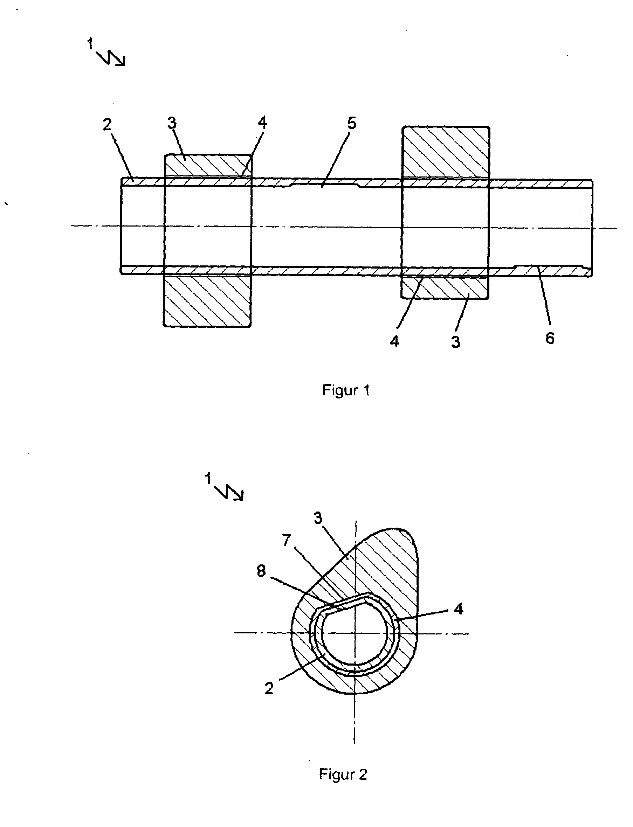

Ein in den Figuren 1 und 2 dargestellter Ausschnitt einer erfindungsgemäßen Welle kommt als gebaute Nockenwelle zum Einsatz und ist allgemein mit 1 gekennzeichnet. Die Nockenwelle 1 weist einen Wellenkörper 2 auf, welcher als Wellenhohlrohr gestaltet ist. Vorzugsweise wird der Wellenkörper 2 aus einem Stahlrohr hergestellt. Mit dem Wellenkörper 2 sind gesondert hergestellte Nocken 3 fest verbunden. Die Verbindung der Nocken 3 mit dem Wellenkörper 2 erfolgt über eine in Figur 2 verdeutlichte formschlüssige Verbindung sowie mittels einer stoffschlüssigen Verbindung über eine Klebeschicht 4. Für die Klebeschicht wird im vorliegenden Ausführungsbeispiel als hochfester Strukturklebstoff ein anaerob aushärtender Klebstoff eingesetzt. Gleichwohl können auch ein- oder zweikomponentige Epoxydharzklebstoffe oder Polyurethane zum Einsatz kommen. Zur Vervollständigung der Nockenwelle 1 werden in der Regel zusätzlich weitere nicht dargestellte Komponenten wie beispielsweise eine Nabe, Kettenradaufnahme, ein Axiallager mit Schulter und meist auch ein asymmetrischer Positionsgeber und/oder weitere Steuerelemente auf der Nockenwelle 1 positioniert. Um eine Nockenwelle 1 bereitzustellen, die nach schwingungstechnischen Gesichtspunkten optimal ausgewuchtet ist, sind auf der Innenseite des als Wellenhohlrohr gestalteten Wellenkörpers 2 Ausbuchtungen 6 und Einbuchtungen 5 vorgesehen. Diese können sich, wie im vorliegenden Ausführungsbeispiel dargestellt, sowohl an der Innenfläche des Wellenhohlrohres 2 befinden, als auch an der Außenfläche. Bei der dargestellten Variante empfiehlt sich beispielsweise die Verwendung eines hohl gegossenen Wellenkörpers 2, so dass bereits bei der Herstellung des Wellenkörpers 2 Ein- und Ausbuchtungen 5,6 vorgesehen werden, damit der Wellenkörper 2 in vorgegebener Weise schwingungstechnisch ausgewuchtet ist.

Figur 2 zeigt eine erfindungsgemäße Nockenwelle 1 im Schnitt durch den Wellenkörper 2 und die Nocke 3. Die erfindungsgemäße Wellenkörper 2 weist eine Aussparung 8 auf. Diese Aussparung ist derart gestaltet, dass bei der Montage von Nocken 3 und Wellenkörper 2 in diese Aussparung ein an der Innenfläche des Nockens 3 vorgesehener Vorsprung 7 eingreifen kann. Dadurch wird eine formschlüssige Verbindung zwischen Wellenkörper 2 und Nocke 3 hergestellt. Die im Ausführungsbeispiel gezeigte formschlüssige Verbindung kann selbstverständlich auch durch andere Formen realisiert werden. Denkbar wäre hier ein polygonförmiges Profil des Wellenkörpers 2 und ein entsprechendes Profil der Öffnung der Nocke 3 mit der die Nocke 3 auf den Wellenkörper 2 aufgeschoben wird. Auch kann die Innenfläche der Öffnung der Nocke 3 einen oder mehrere vorstehende Ausläufer aufweisen, die in entsprechende Spalte in der Außenfläche des Wellenkörpers 2 eingreifen. Durch diese formschlüssige Verbindung wird die Nocke 3 in Radialrichtung hinsichtlich des Wellenkörpers 2 lagerichtig positioniert. Die unterschiedlichen Phasenlagen mehrerer auf dem Wellenkörper 2 fixierten Nocken 3 kann bereits durch die Herstellung einer Nocke 3 bestimmt werden. Vorzugsweise werden die Vorsprünge 8 der Nocken 3 entsprechend der gewünschten Phasenlage an verschiedenen Stellen an der Öffnung der Nocken 3 ausgebildet. Vorzugsweise werden die Nocken 3 im Sinterverfahren hergestellt und je nach vorbestimmter Phasenlage mit der entsprechenden Form versehen. Weiter weist die Nockenwelle 1 eine Klebeschicht 4 zwischen Nocke 3 und dem Wellenkörper 2 auf. Diese Klebeschicht 4 dient der Fixierung in axialer Richtung hinsichtlich des Wellenkörpers 2 und zusätzlich zu der formschlüssigen Verbindung in radialer Richtung.

Zur Montage der Nockenwelle 1 wird die Nocke 3 auf den Wellenkörper 2 in der vorbestimmten Winkelposition hinsichtlich der Wellenachse geschoben. Dabei kann der Wellenkörper 3 ein dem Einsatzbereich angepasstes, beliebiges Profil aufweisen und die Öffnung der Nocke 3 jeweils invertiert dazu profiliert sein. Der Klebstoffauftrag für die Klebeschicht zwischen der Nocke 3 und dem Wellenkörper 4 kann insbesondere bei Verwendung eines fließfähigen, niedrigviskosen Klebstoffes erst dann aufgetragen werden, wenn die Nocke 3 an der vorgesehenen Position auf dem Wellenkörper 2 angelangt ist. Gleichwohl ist es denkbar, insbesondere bei einem höher viskosen Klebstoff, den Auftrag schon vor dem Erreichen der vorgesehen Position der Nocke 3 vorzunehmen. Dies ist sowohl auf der Mantelfläche des Wellenkörpers 2, als auch auf der Innenfläche der Öffnung der Nocke 3 möglich. Auf diese Weise kann beim Aufschieben der Nocke 3 auf den Wellenkörper 2 ein gleichmäßiger Klebstoffauftrag bereitgestellt werden. Zudem kann die Klebeschicht 4 im nicht ausgehärteten Zustand als Gleitfilm fungieren, die das Zusammenfügen von Nocke 3 und Wellenkörper 2 erleichtert. Neben den Nocken 3 kann die Nockenwelle 1 weitere nicht dargstellte Bauteile wie beispielsweise Nocken, Kettenradaufnahmen, Axiallager, Axiallagerschulter, Signalgeber oder dergleichen beinhalten.

## Patentansprüche

1. Welle (1) mit einem Wellenkörper (2) und wenigstens einem daran fixierten Bauteil (3),wobei
die Verbindung des Bauteils (3) mit dem Wellenkörper (2) über einen Formschluß (7,8) und über einen Stoffschluß (4) hergestellt ist, **dadurch gekennzeichnet, dass** die stoffschlüßige Verbindung durch hochfesten Strukturklebstoff hergestellt ist.

2. Welle (1) nach Anspruch 1, **dadurch gekennzeichnet, dass** das Bauteil (3) durch den Formschluß (7,8) auf dem Wellenkörper (2) radial positioniert ist.

3. Welle (1) nach einem der vorhergehenden Ansprüche, **dadurch gekennzeichnet, dass** das Bauteil (3) durch den Stoffschluß (4) axial auf dem Wellenkörper (2) fixiert ist.

4. Welle (1) nach einem der vorhergehenden Ansprüche, **dadurch gekennzeichnet, dass** ein Epoxydharzklebstoff als hochfester Strukturklebstoff für die stoffschlüssige Verbindung (4) zum Einsatz kommt.

5. Welle (1) nach einem der Ansprüche 1 bis 3, **dadurch gekennzeichnet, dass** ein anaerob aushärtender Klebstoff als hochfester Strukturklebstoff für die stoffschlüssige Verbindung (4) zum Einsatz kommt.

6. Welle (1) nach einem der Ansprüche 1 bis 3, **dadurch gekennzeichnet, dass** ein Polyurethan als hochfester Strukturklebstoff für die stoffschlüssige Verbindung (4) zum Einsatz kommt.

7. Welle (1) nach einem der vorhergehenden Ansprüche, **dadurch gekennzeichnet, dass** das Spaltmaß zwischen dem Bauteil (3) und dem Wellenkörper (2) kleiner/gleich 500µm ist.

8. Welle (1) nach einem der vorhergehenden Ansprüche, **dadurch gekennzeichnet, dass** der Wellenkörper (2) ein Wellenhohlrohr ist.

9. Welle (1) nach einem der vorhergehenden Ansprüche, **dadurch gekennzeichnet, dass** der Wellenkörper (2) ein Wellenhohlrohr ist, auf dem Mittel (5,6) für einen Unwuchtsausgleich vorgesehen sind.

10. Welle (1) nach einem der vorhergehenden Ansprüche, **dadurch gekennzeichnet, dass** der Wellenkörper (2) und das Bauteil (3) aus dem gleichen Werkstoff bestehen.

11. Welle (1) nach einem der Ansprüche 1 bis 9, **dadurch gekennzeichnet, dass** wenigstens ein Bauteil (3) aus einem anderen Werkstoff gefertigt ist, als der Wellenkörper (2).

12. Welle (1) nach einem der Ansprüche 1 bis 9, **dadurch gekennzeichnet, dass** wenigstens ein Bauteil (3) aus gesintertem Material oder sintergeschmiedetem Material oder gegossenem Material oder geschmiedetem Material besteht.

13. Welle (1) nach einem der vorhergehenden Ansprüche, **dadurch gekennzeichnet, dass** es sich bei dem Bauteil (3) um ein Lager und/oder beliebig ausgebildete Steuerelemente wie Nocken (3), Exzenter oder Zahnräder handelt.

## Claims

1. Shaft (1) with a shaft body (2) and at least one component (3) fixed thereon, wherein the joint of the component (3) with the shaft body (2) is produced by an interlocking joint (7,8) and by a cohesive joint (4) **characterized in that** the cohesive joint is produced by a high-strength structural adhesive.

2. Shaft (1) according to claim 1, **characterized in that** the component (3) is radially positioned by the interlocking joint (7,8) on the shaft body (2).

3. Shaft (1) according to one of the previous claims, **characterized in that** the component (3) is axially fixed by the cohesive joint (4) on the shaft body (2).

4. Shaft (1) according to one of the previous claims, **characterized in that** an epoxy resin adhesive is used as the high-strength adhesive for the cohesive joint (4).

5. Shaft (1) according to one of claims 1 to 3, **characterized in that** an anaerobically curing adhesive is used as the high-strength adhesive for the cohesive joint (4).

6. Shaft (1) according to one of claims 1 to 3, **characterized in that** a polyurethane is used as the high-strength adhesive for the cohesive joint (4).

7. Shaft (1) according to one of the previous claims, **characterized in that** the size of the gap between component (3) and the shaft body (2) is less than or equal to 500 µm.

8. Shaft (1) according to one of the preceding claims, **characterized in that** the shaft body (2) is a hollow shaft tube.

9. Shaft (1) according to one of the preceding claims, **characterized in that** the shaft body (2) is a hollow shaft tube, on which are provided means (5,6) for compensating an out of balance.

10. Shaft (1) according to one of the preceding claims, **characterized in that** the shaft body (2) and the component (3) consist of the same material.

11. Shaft (1) according to one of claims 1 to 9, **characterized in that** at least one component (3) is produced from another material than the shaft body (2).

12. Shaft (1) according to one of claims 1 to 9, **characterized in that** at least one component (3) consists of sintered material.

13. Shaft (1) according to one of the previous claims, **characterized in that** the component (3) concerns a bearing and/or any formed control element such as cams (3), hubs or gear wheels.

## Revendications

1. Arbre (1) avec un corps d'arbre (2) et au moins un composant (3) qui y est fixé, l'assemblage du composant (3) au corps d'arbre (2) étant réalisé par le biais d'une relation de complémentarité de formes (7, 8) et par le biais d'une relation d'adhérence (4), **caractérisé en ce que** l'assemblage par relation d'adhérence est réalisé par le biais d'un adhésif de structure haute rigidité.

2. Arbre (1) selon la revendication 1, **caractérisé en ce que** le composant (3) est positionné radialement sur le corps d'arbre (2) par le biais de la relation de complémentarité de formes (7, 8).

3. Arbre (1) selon l'une des revendications précédentes, **caractérisé en ce que** le composant (3) est fixé axialement sur le corps d'arbre (2) par le biais de la relation d'adhérence (4).

4. Arbre (1) selon l'une des revendications précédentes, **caractérisé en ce qu'**un adhésif en résine époxyde est utilisé en tant qu'adhésif haute rigidité pour l'assemblage par relation d'adhérence (4).

5. Arbre (1) selon l'une des revendications 1 à 3, **caractérisé en ce qu'**un adhésif durcissant anaérobie est utilisé en tant qu'adhésif de structure haute rigidité pour l'assemblage par relation d'adhérence (4).

6. Arbre (1) selon l'une des revendications 1 à 3, **caractérisé en ce qu'**un polyuréthane est utilisé en tant qu'adhésif de structure haute rigidité pour l'assemblage par relation d'adhérence (4).

7. Arbre (1) selon l'une des revendications précédentes, **caractérisé en ce que** la mesure de l'écartement entre le composant (3) et le corps d'arbre (2) est inférieur/égal à 500 µm.

8. Arbre (1) selon l'une des revendications précédentes, **caractérisé en ce que** le corps d'arbre (2) est un tube creux d'arbre.

9. Arbre (1) selon l'une des revendications précédentes, **caractérisé en ce que** le corps d'arbre (2) est un tube creux d'arbre sur lequel sont prévus des moyens (5, 6) pour une compensation de déséquilibre.

10. Arbre (1) selon l'une des revendications précédentes, **caractérisé en ce que** le corps d'arbre (2) et le composant (3) sont constitués du même matériau.

11. Arbre (1) selon l'une des revendications 1 à 9, **caractérisé en ce qu'**au moins un composant (3) est fabriqué à partir d'un matériau autre que le corps d'arbre (2).

12. Arbre (1) selon l'une des revendications 1 à 9, **caractérisé en ce qu'**au moins un composant (3) est constitué d'un matériau fritté ou d'un matériau obtenu par frittage-forgeage ou d'un matériau coulé ou d'un matériau forgé.

13. Arbre (1) selon l'une des revendications 1 à 9, **caractérisé en ce que** dans le cas du composant (3), il s'agit d'un palier et/ou d'éléments de commande formés de manière différente comme des cames (3), des excentriques ou des roues dentées.
